(19) Europäisches Patentamt
European Patent Office
Office européen des brevets

(11) EP 1 557 260 A2

(12) **EUROPÄISCHE PATENTANMELDUNG**

(43) Veröffentlichungstag:
**27.07.2005 Patentblatt 2005/30**

(51) Int Cl.[7]: **B32B 15/01**, C23F 13/00

(21) Anmeldenummer: **05000978.6**

(22) Anmeldetag: **19.01.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **20.01.2004 DE 102004002840**

(71) Anmelder: **Erbslöh Aluminium GmbH**
**42553 Velbert (DE)**

(72) Erfinder: **Sucke, Norbert William**
**47269 Duisburg (DE)**

(74) Vertreter: **Ludewig, Karlheinrich, Dipl.-Ing.**
**Patentanwälte Dipl.-Phys. Buse,**
**Dipl.-Phys. Mentzel,**
**Dipl.-Ing. Ludewig,**
**Kleiner Werth 34**
**42275 Wuppertal (DE)**

(54) **Verfahren zum Herstellen eines dekorativen, festen Prägeblechteils**

(57) Die Erfindung bezieht sich auf ein Verfahren zum Herstellen eines dekorativen, festen Prägeblechteils aus Aluminium und/oder einer Aluminiumlegierung.

Dieses dekorative feste Prägeblechteil kann eine gewünschte Form besitzen und weist eine gute Kratzfestigkeit und eine hohe Eindrückfestigkeit auf. Diese Blechteile sind in einer breiten Formenvielfalt herstellbar. Die dekorative Oberfläche besitzt ein metallisch wirkendes Aussehen und kann nach Wunsch blank oder matt in der ursprünglichen Farbe oder eingefärbt sein.



Printed by Jouve, 75001 PARIS (FR)

## Beschreibung

Die Erfindung bezieht sich auf ein Verfahren zum Herstellen eines dekorativen, festen Prägeblechteils aus Aluminium und/oder Aluminiumlegierung.

Dessinierte Aluminiumbleche werden seit vielen Jahren von der Anmelderin in über 300 Mustern gefertigt. Diese Dessinbleche verleihen Möbeln, Koffern, Haushaltsgeräten oder Automobilteilen ein dekoratives Aussehen, wobei sich selbst sehr feine Muster infolge der guten Umformbarkeit des verwendeten weichen Aluminiummaterials sauber ausbilden lassen. Zur Anwendung gelangen insbesondere nichtlegierte Reinaluminium-Werkstoffe, da diese gut dessinierbar und gut eloxierbar sind. Diese Werkstoffe weisen jedoch in nachteiliger Weise eine geringe Festigkeit auf. Für Zierteile bei Kraftfahrzeugen wird jedoch beispielsweise eine hohe Kratzfestigkeit und eine hohe Eindrückfestigkeit gefordert.

Aus der deutschen Offenlegungsschrift DE 198 23 472 A1 sind Aluminiumverbundbleche mit einer hohen Festigkeit bekannt, die insbesondere als Luftfahrtbleche eingesetzt werden. Diese walzplattierten Verbundbleche bestehen aus einem harten Kernblech, z.B. einer AlCuMg-Legierung. Dieses Kernblech ist mit einer weichen Reinaluminiumlegierung plattiert. Diese Plattierungen dienen dem Korrosionsschutz. In anderen Fällen wird eine Lotplattierung auf dem Kernblech vorgesehen. Die Verwendung und Verarbeitung solcher walzplattierten Verbundbleche zu dekorativen, umgeformten Prägeblechteilen, insbesondere dessinierten Aluminiumblechteilen, ist nicht bekannt.

Aufgabe der Erfindung ist es, dekorative feste Prägebleche zur Verfügung zu stellen, die insbesondere auch den Anforderungen, die an Kraftfahrzeugzierteile gestellt werden, erfüllen.

Diese Aufgabe wird durch ein Verfahren zum Herstellen eines dekorativen, festen Prägeblechteils gemäß Anspruch 1 erfüllt.

Das entstehende dekorative Prägeblechteil aus Aluminium und/oder einer Aluminiumlegierung weist eine hohe Festigkeit auf. Diese hohe Zugfestigkeit $R_m$>180N/mm$^2$ wird erreicht, indem das verwendete Verbundblech aus einem harten Kernblech hergestellt wird. Insbesondere werden als Kernbleche AlCuMg-Legierungen (2XXX) bzw. AlMn-Legierungen (3XXX) verwendet. Diese harten Kernbleche besitzen eine weiche, eloxierbare Plattierung aus nichtlegiertem Aluminium (1XXX) oder aus einer AlMgSi-Legierung (6XXX) oder aus einer AlMg-Legierung (5XXX). Die Festigkeit der harten Kernbleche $R_{m,Kern}$ ist wesentlich größer als die Festigkeit der ein- oder beidseitigen Plattierung $R_{m,Plattierung}$. Das Verhältnis der Festigkeiten beträgt mindestens

$$R_{m,Kern} / R_{m,Plattierung} > 1{,}5.$$

Bevorzugt sind jedoch Festigkeitsunterschiede von

$$R_{m,Kern} / R_{m,Plattierung} > 2 \text{ bis } 5.$$

Die ein- oder beidseitige Plattierung auf dem Kernblech weist eine geringere Dicke als die Dicke des Kernblechs auf. Bei einseitiger Plattierung ist die Dicke der Plattierung nicht größer als 50% der Dicke des Kernbleches, vorzugsweise nicht größer als 5 bis 20% der Dicke des Kernblechs. Bei zweiseitiger Plattierung ist die Dicke einer Plattierung nicht größer als 30% der Dikke des Kernbleches, vorzugsweise nicht größer als 5 bis 20% der Dicke des Kernblechs.

Das entstehende dekorative Aluminiumblechteil besitzt an mindestens einer Oberfläche mechanisch eingebrachte Vertiefungen, die ein Muster bilden, beispielsweise ein Prägemuster oder ein Dessinmuster.

Das entstehende dekorative Aluminiumblechteil kann beispielsweise ein ebenes Blech, eine gebogene Blechlage oder ein dreidimensional geformtes Blechteil sein, dass vielseitig eingesetzt werden kann.

Das enstehende dekorative Prägeblechteil weist eine veredelte und versiegelte Oberfläche auf, die durch verschiedene chemische Oberflächenbehandlungsverfahren erzielt wird, wie beispielsweise chemisches Glänzen, Eloxieren (anodisches Oxidieren), Färben und abschließendes Verdichten. Das Färbeverfahren kann ein Absorbtionsfärben, Reaktionsfärben, elektrolytisches Einfärben oder eine Kombination dieser Verfahren sein. Als Verdichtung kommen alle bekannten Verfahren in Frage, wie beispielsweise Kaltverdichten, Heißdampfverdichten oder eine Kombination dieser. Des Weiteren kann die Oberfläche auch durch eine Nanolackschicht versiegelt werden. Wesentlich bei der Anwendung der Oberflächenbehandlungsverfahren ist, dass das dekorative Blechteil sein metallisch wirkendes Aussehen behält. Je nach Wunsch können des Weiteren Bereiche des eingebrachten Musters blank oder matt erscheinen, in der ursprünglichen Farbe des Aluminiumbleches oder auch eingefärbt.

Gemäß dem erfindungsgemäßen Verfahren zum Herstellen eines dekorativen, festen Prägeblechteils wird ein Verbundblech aus Aluminium und einer Aluminiumlegierung oder verschiedenen Aluminiumlegierungen zu einem Blechteil umgeformt. Dieses Umformen kann in einem Schritt oder in mehreren Schritten erfolgen, wobei jeweils gleiche oder unterschiedliche Umformverfahren Anwendung finden. Dazu wird vorzugsweise ein entsprechend dimensioniertes ebenes Blechstück vom Verbundausgangsblech abgetrennt und in die Umformvorrichtung eingelegt. Die Abtrennung kann auch nach dem Umformen erfolgen. Bevorzugte Umformverfahren sind Tiefziehen, Biegen oder Hydroformen.

Da es sich bei einem Umformverfahren um einen Kaltumformprozess handelt, muss das Ausgangsblech die notwendige Kaltumformbarkeit aufweisen. Bedarfsweise kann zu diesem Zweck das Ausgangsverbundblech vor dem Umformen einem Glühschritt unterzogen werden. Bei aushärtbaren Aluminiumlegierungen als Material für das Kernblech, wird durch Lösungsglühen und abschließende Abschreckung dieses Ziel erreicht, wobei bei Temperaturen von etwa 300°C die beim Herstellen des Ausgangsverbundbleches entstandenen Versetzungen im Gefüge beseitigt werden, und bei weiterem Temperaturanstieg auf Temperaturen von >500°C die Ausscheidungen in Lösung gehen. Die Lösungsglühtemperaturen sind für unterschiedliche Aluminiumlegierungen unterschiedlich hoch. Für eine AlCuMg-Legierung liegt die Lösungsglühtemperatur bei etwa 450-550C°. Durch anschließende rasche Abschreckung des Verbundbleches auf Raumtemperatur entsteht ein umformbares, weiches Blech das innerhalb eines bestimmten Zeitfensters umformbar ist, d.h. bevor eine Verfestigung der aushärtbaren Legierung erfolgt. Die Abkühlraten bei der Abschreckung werden zwischen 10-500°C/s gewählt.

Wird als Ausgangsblech ein Verbundblech mit einem AlMn-Kernblech eingesetzt so kann bedarfsweise für dieses nichtaushärtbare AlMn-Legierungsmaterial ein Weichglühschritt erfolgen, bei dem ausschließlich die Versetzungen im Gefüge beseitigt werden.

Die beschriebenen Glühbehandlungen sind bedarfsweise auch nach einem Umformschritt vorzusehen, insbesondere wenn mehrere Umformschritte notwendig sind um die gewünschte Form des Blechteils zu erhalten.

In einer bevorzugten Ausführungsform wird während des Umformens gleichzeitig ein Muster in eine Oberfläche des Verbundbleches eingebracht. Dieses Muster kann ganz oder teilflächig auf der Oberfläche des Verbundbleches vorgesehen werden. Des Weiteren ist es möglich, beide Seiten des Verbundbleches d.h. sowohl die obere als auch die untere Plattierung mit einem Muster zu versehen. Die Umformvorrichtungen sind für diesen Zweck mit entsprechenden Prägewerkzeugen auszustatten.

Bei einer Verfahrensvariante wird beim Umformen und gleichzeitigen Mustereinprägen die dünne Plattierung des Verbundbleches teilweise durchgedrückt, so dass an diesen Stellen die Kernschicht freigelegt wird. Durch die Verwendung unterschiedlicher Legierungen für das Kernblech und für die Plattierung ergibt sich bei der nachfolgenden Oberflächenbehandlung ein unterschiedliches Aussehen der Musterbereiche des freigelegten Kernbleches gegenüber den Musterbereichen die durch die Plattierung gebildet werden. Beispielsweise ist es durch eine entsprechende Legierungsauswahl möglich, Musterbereiche matt und andere Musterbereiche glänzend blank erscheinen zu lassen. Dies kann durch Legierungen mit unterschiedlichem Zusatz an Eisen erzielt werden, wobei ein hoher Anteil an Eisen eine matte Oberfläche ergibt.

Das durch die Umformung entstandene Prägeblechteil wird bedarfsweise warm ausgehärtet. Diese Warmaushärtung wird für eine Zeitdauer von 8 Stunden bei 180°C durchgeführt.

Abschließend erhält das Prägeblechteil die gewünschte, chemische Oberflächenbehandlung, neben den Vorbehandlungen, wie Entfetten, Spülen, Beizen, sind für dekorative Oberflächen insbesondere das chemische oder elektrolytische Glänzen, das Eloxieren (anodisches Oxidieren) und ein oder mehrere Färbeverfahren anwendbar. Beim Färben wird insbesondere die beim Eloxieren entstandene Oxidschicht eingefärbt. Abhängig von der farbgebenden Komponente handelt es sich dabei um ein Absorbtions-, Reaktions- oder um ein elektolytisches Färbeverfahren. Des Weiteren ist eine Kombination der unterschiedlichen Färbeverfahren denkbar.

Für die notwendige Schutzwirkung ist für die ungefärbte oder eingefärbte Oxidschicht eine Verdichtung vorzusehen, dabei werden die Poren der Oxidschicht geschlossen. Es kann sich bei der Verdichtung um eine Kaltverdichtung, Heißdampfverdichtung oder eine Kombination beider Verfahren handeln.

In einer Verfahrensvariante wird das vorbehandelte Prägeblechteil mit einer Nanolackschicht versiegelt.

Als Ergebnis wird ein dekoratives, festes Prägeblechteil der gewünschten Form erhalten. Ein solches Blechteil weist eine gute Kratzfestigkeit und eine hohe Eindrückfestigkeit auf, d.h. besteht den sogenannten Schlüsseltest, der bei Kraftfahrzeugteilen als Prüfverfahren eingesetzt wird. Erstmalig stehen beliebig gefärbte Dessinblechteile in einer breiten Formenvielfalt zur Verfügung, wobei auf eine Vielzahl von bekannter Dessinmuster beim Dessinieren zurückgegriffen werden kann.

## Patentansprüche

1. Verfahren zum Herstellen eines dekorativen festen Prägeblechteils, **dadurch gekennzeichnet, dass** aus einem harten Kernblech aus einer Aluminiumlegierung, welches eine hohe Festigkeit $R_m$ > 220 N/mm$^2$ aufweist, und aus einer weichen, eloxierbaren Plattierung aus Aluminium (1xxx) oder aus einer AlMgSi-Legierung (6xxx) oder aus einer AlMg-Legierung (5xxx), wobei die Plattierung eine geringe Dicke aufweist, ein Verbundblech hergestellt wird, diese Verbundblech durch Wärmebehandlung in ein weiches, umformbares Blech umgewandelt wird,

   welches nachfolgend innerhalb eines Zeitfensters zu einem Blechteil umgeformt wird und

   abschließend dieses umgeformte Blechteil einer chemischen Oberflächenbehandlung unterzogen wird, wobei die Oberfläche ein dekoratives Aussehen erhält und versiegelt wird.

**2.** Verfahren nach Anspruch 1, **dadurch gekennzeichnet, dass** das eingesetzte Blech aus einem walzplattierten Verbundblech besteht, welches aus einem harten Kernblech aus einer AlCuMg-Legierung (2xxx) oder AlMn-Legierung (3xxx), welches mit einer beidseitigen Plattierung versehen ist, wobei die Plattierung eine Dicke aufweist, die nicht größer als 30% der Dicke des Kernblechs, vorzugsweise nicht größer als 5 bis 20% der Dicke des Kernblechs ist.

**3.** Verfahren nach Anspruch 1, **dadurch gekennzeichnet, dass** das eingesetzte Blech aus einem walzplattierten Verbundblech besteht, welches aus einem harten Kernblech aus einer AlCuMg-Legierung (2xxx) oder AlMn-Legierung (3xxx), welches mit einer einseitigen Plattierung versehen ist, wobei die Plattierung eine Dicke aufweist, die nicht größer als 50% der Dicke des Kernblechs, vorzugsweise nicht größer als 5 bis 20% der Dicke des Kernblechs ist.

**4.** Verfahren nach Anspruch 2 oder 3, **dadurch gekennzeichnet, dass** das harte Kernblech aus einer AlMn-Legierung (3xxx) besteht und die Wärmebehandlung vor dem Umformen ein Lösungsglühen bei Temperaturen von 450 bis 550°C und eine schnelle Abschreckung auf Raumtemperaturen mit Abschreckraten von 10 bis 500°C/s umfasst.

**5.** Verfahren nach Anspruch 2 oder 3, **dadurch gekennzeichnet, dass** das harte Kernblech aus einer AlCuMg-Legierung (2xxx) besteht und die Wärmebehandlung vor dem Umformen ein Weichglühen bei Temperaturen von etwa 300°C umfasst.

**6.** Verfahren nach einem der Ansprüche 1 bis 5, **dadurch gekennzeichnet, dass** während des Umformens gleichzeitig ganz- oder teilflächig ein Muster in eine Oberfläche des Verbundblechs eingebracht wird und sich ein Blechteil mit einem eingedrückten Muster ergibt.

**7.** Verfahren nach Anspruch 6, **dadurch gekennzeichnet, dass** beim Umformen und gleichzeitigen Mustereinbringen die dünne Plattierung des Verbundblechs teilweise durchgedrückt und an diesen Stellen die Kernschicht freigelegt wird.

**8.** Verfahren nach einem der Ansprüchen 1 bis 7, **dadurch gekennzeichnet, dass** das Blech durch Tiefziehen und/oder Biegen und /oder Prägen und/ oder Hydroformen zum Blechteil umgeformt wird.

**9.** Verfahren nach Anspruch 8, **dadurch gekennzeichnet, dass** nach einem Umformschritt ein Lösungsglühen und/ oder Weichglühen des Blechs erfolgt.

**10.** Verfahren nach Anspruch 9, **dadurch gekennzeichnet, dass** dem Lösungsglühen eine rasche Abschreckung mit einer Abschreckrate von 10 bis 500 K/s folgt.

**11.** Verfahren nach einem der Ansprüche 7 bis 9, **dadurch gekennzeichnet, dass** dem Umformen des Verbundbleches eine Warmaushärtung folgt.

**12.** Verfahren nach einem der Ansprüchen 1 bis 11, **dadurch gekennzeichnet, dass** das Blechteil durch Glänzen und/oder Eloxieren und/ oder elektrolytisches Färben und/oder Lackieren mit Nanolack und/oder Verdichten behandelt wird.